# EUROPÄISCHE PATENTSCHRIFT

(11) **EP 2 482 572 B1**
(45) Veröffentlichungstag und Bekanntmachung des Hinweises auf die Patenterteilung: **18.03.2015**
(21) Anmeldenummer: 11152298.3
(22) Anmeldetag: 27.01.2011
(51) Int. Cl.: H04W 8/24, H04M 1/725, G06F 9/445

(54) **Kontext-sensitiver Software-Update für ein Kommunikationsgerät**
Context-sensitive software update for a communication device
Mise à jour logicielle contextuelle pour un appareil de communication

(43) Veröffentlichungstag der Anmeldung: 01.08.2012
(73) Patentinhaber: Gigaset Communications GmbH, 81379 München (DE)
(72) Erfinder: Beckers, Michael, 46499, Hamminkeln (DE)
(74) Vertreter: Michalski Hüttermann & Partner Patentanwälte mbB

(56) Entgegenhaltungen:
- EP-A1- 1 956 857
- US-A1- 2004 214 559

## Beschreibung

Die Erfindung betrifft Verfahren zum Laden von Aktualisierungsdaten für ein Kommunikationsgerät, ein Kommunikationsgerät, ein computerlesbares Speichermedium und ein Programm-Element.

Es ist allgemein bekannt, dass eine Betriebssoftware eines Kommunikationsgeräts aktualisiert werden kann, um einem Benutzer des Kommunikationsgeräts neue Anwendungen bereitzustellen. Zu diesem Zweck ist es erforderlich, dass die zu ladenden Aktualisierungsdaten für die Betriebssoftware gezielt für das Kommunikationsgerät ausgewählt und geladen werden können.

Üblicherweise wählt der Benutzer des Kommunikationsgeräts die zu ladenden Aktualisierungsdaten für das Kommunikationsgerät selbst aus und lädt diese, um eine Geräte-angepasste Aktualisierung der Betriebssoftware des Kommunikationsgeräts zu gewährleisten. Alternativ können Geräteinformation über das Kommunikationsgerät wahlweise automatisiert oder durch den Benutzer initiiert an eine Datenbereitstellungsvorrichtung zum Bereitstellen der Aktualisierungsdaten gesendet werden. Die Datenbereitstellungsvorrichtung kann dann basierend auf der erhaltenen Geräteinformation über das Kommunikationsgerät die geeigneten Aktualisierungsdaten für das Kommunikationsgerät auswählen und entweder die Aktualisierungsdaten selbst oder eine entsprechende Ladeinformation an das Kommunikationsgerät senden. Es ist ebenfalls möglich, dass die Datenbereitstellungsvorrichtung dem Kommunikationsgerät einen Vorschlag über die geeigneten Aktualisierungsdaten übermitteln und der Benutzer des Kommunikationsgeräts die Aktualisierungsdaten basierend auf dem Vorschlag laden kann.

Üblicherweise ist das Kommunikationsgerät allerdings Teil eines Mehrgerätesystems, das zumindest ein weiteres, kommunikativ koppelbares Kommunikationsgerät aufweist.

Die oben beschriebene Aktualisierung der Betriebssoftware eines Kommunikationsgeräts eines solchen Mehrgerätesystems basierend auf der Geräteinformation über das Kommunikationsgerät kann unzureichend sein, da gerätespezifische Randbedingungen zwischen dem Kommunikationsgerät und dem zumindest weiteren Kommunikationsgerät des Mehrgerätesystems nicht berücksichtigt werden können. Solche Randbedingungen können sich beispielsweise aus einem von dem weiteren Kommunikationsgerät unterstützen Kommunikationsprotokoll ergeben.

Um die Aktualisierung der Betriebssoftware des Kommunikationsgeräts des Mehrgerätesystems zu vereinfachen, ist es bekannt, das Kommunikationsgerät derart herzustellen, dass das Kommunikationsgerät alle baulich unterschiedlichen Varianten des zumindest weiteren Kommunikationsgeräts des Mehrgerätesystems unterstützten kann, so dass Aktualisierungen der Betriebssoftware des Kommunikationsgeräts, die durch Aktualisierungen der Betriebssoftware des zumindest weiteren Kommunikationsgeräts hervorgerufen wurde, nicht erforderlich sind. Dies kann allerdings eine hohe Speicherkapazität des Kommunikationsgeräts erfordern. Darüber hinaus muss ein Hersteller des Kommunikationsgeräts alle potentiell möglichen Aktualisierungen der Betriebssoftware des Kommunikationsgeräts im Voraus antizipieren, was in der Regel nicht möglich ist.

Es ist ebenfalls bekannt, dass der Benutzer die Betriebssoftware des Kommunikationsgeräts des Mehrgerätesystems aktualisieren kann, indem der Benutzer die zu ladenden Aktualisierungsdaten für das Kommunikationsgerät basierend auf einer Geräteinformation über das Kommunikationsgerät und einer weiteren Geräteinformation über das weitere Kommunikationsgerät auswählen kann. Diese Art der Aktualisierung der Betriebssoftware des Kommunikationsgeräts kann für den Benutzer des Kommunikationsgeräts allerdings sehr zeitaufwändig sein.

US 2004/0214559 A1 beschreibt, dass Systeme und Verfahren für austauschbare Hardware-komponenten auf einem drahtlosen Kommunikationsgerät bereitgestellt sind. Wenn ein Handapparat eingeschaltet wird, nachdem eine Hardwarekomponente ausgetauscht worden ist, erkennt das Handgerät das Vorhandensein der neuen Komponente. Das Handgerät fragt dann die Komponente ab, um Profilinformation über die Komponente zu erhalten. Das Handgerät fragt als nächstes einen Update-Server über ein drahtloses Kommunikationsnetzwerk ab und fragt einen optimierten Gerätetreiber an, der es ermöglichen wird, dass das Handgerät die komplette Funktionalität der neuen Hardwarekomponente benutzt. Der Update-Server antwortet mit dem ausführbaren Gerätetreiber an sich und einem Anweisungssatz zum Installieren des Gerätetreibers. Bei Erhalt installiert das Handgerät den Gerätetreiber und rekonfiguriert sich oder startet erneut, um den Installations- und Konfigurationsprozess zu vervollständigen.

Es ist daher eine Aufgabe der vorliegenden Erfindung, ein einfaches, kostengünstiges und zeitsparendes Verfahren zum Laden von Aktualisierungsdaten für eine Betriebssoftware eines Kommunikationsgeräts bereitzustellen. Es ist ebenfalls eine Aufgabe der Erfindung, ein Kommunikationsgerät bereitzustellen, das ein solches Verfahren zum Laden von Aktualisierungsdaten für das Kommunikationsgerät ausführen kann.

Diese Aufgabe wird durch Verfahren zum Laden von Aktualisierungsdaten für ein Kommunikationsgerät, ein Kommunikationsgerät, ein computerlesbares Speichermedium, und ein Programm-Element gemäß den unabhängigen Ansprüchen gelöst.

Gemäß einem exemplarischen Aspekt der Erfindung wird ein Verfahren zum Laden von Aktualisierungsdaten für ein Kommunikationsgerät bereitgestellt, wobei das Verfahren von dem Kommunikationsgerät ausgeführt wird, wobei das Verfahren Erzeugen von Gerätekontextinformation basierend auf einer Geräteinformation über das Kommunikationsgerät und zumindest einer weiteren Geräteinformation über ein zumindest weiteres Kommunikationsgerät, das mit dem Kommunikationsgerät kommunikativ koppelbar ist, und Laden der Aktualisierungsdaten basierend auf der Gerätekontextinformation aufweist.

Gemäß einem weiteren exemplarischen Aspekt der Erfindung wird ein Verfahren zum Laden von Aktualisierungsdaten für ein Kommunikationsgerät bereitgestellt, wobei das Verfahren von einer Datenbereitstellungsvorrichtung ausgeführt wird, wobei das Verfahren Erhalten zumindest eines Teils von durch das Kommunikationsgerät erzeugter Gerätekontextinformation, die auf einer Geräteinformation über das Kommunikationsgerät und zumindest einer weiteren Geräteinformation über zumindest ein weiteres Kommunikationsgerät basiert, das mit dem Kommunikationsgerät kommunikativ koppelbar ist, und Senden von Information zum Laden der Aktualisierungsdaten aufweist.

Gemäß einem weiteren exemplarischen Aspekt der Erfindung wird ein Kommunikationsgerät bereitgestellt, wobei das Kommunikationsgerät eine Einheit zum Erzeugen von Gerätekontextinformation basierend auf einer Geräteinformation über das Kommunikationsgerät und zumindest einer weiteren Geräteinformation über ein zumindest weiteres Kommunikationsgerät, das mit dem Kommunikationsgerät kommunikativ koppelbar ist, und eine Einheit zum Laden der Aktualisierungsdaten basierend auf der Gerätekontextinformation aufweist.

Gemäß einem weiteren exemplarischen Aspekt der Erfindung wird ein computerlesbares Speichermedium bereitgestellt, wobei in dem computerlesbaren Speichermedium ein Programm zum Laden von Aktualisierungsdaten für ein Kommunikationsgerät gespeichert ist, welches Programm, wenn es von einem Prozessor ausgeführt wird, ein oben beschriebenes Verfahren zum Laden von Aktualisierungsdaten für ein Kommunikationsgerät ausführt oder steuert.

Gemäß einem weiteren exemplarischen Aspekt der Erfindung wird ein Programm-Element zum Laden von Aktualisierungsdaten für ein Kommunikationsgerät bereitgestellt, welches Programm-Element, wenn es von einem Prozessor ausgeführt wird, ein oben beschriebenes Verfahren zum Laden von Aktualisierungsdaten für ein Kommunikationsgerät ausführt oder steuert.

Eine Datenbereitstellungsvorrichtung weist eine Einheit zum Erhalten zumindest eines Teils von durch ein Kommunikationsgerät erzeugter Gerätekontextinformation, die auf einer Geräteinformation über das Kommunikationsgerät und zumindest einer weiteren Geräteinformation über zumindest ein weiteres Kommunikationsgerät basiert, das mit dem Kommunikationsgerät kommunikativ koppelbar ist, und eine Einheit zum Senden von Information zum Laden der Aktualisierungsdaten auf. Insbesondere kann die Datenbereitstellungsvorrichtung Schritte eines oben beschriebenen Verfahrens zum Laden von Aktualisierungsdaten für ein Kommunikationsgerät ausführen.

Ein System zum Laden von Aktualisierungsdaten für ein Kommunikationsgerät weist das oben beschriebene Kommunikationsgerät und die oben beschriebene Datenbereitstellungsvorrichtung auf.

Im Zusammenhang mit der vorliegenden Erfindung kann der Begriff "Aktualisierungsdaten" insbesondere Daten bezeichnen, die bei einer Aktualisierung zumindest eines Teils einer Betriebssoftware eines Kommunikationsgeräts verwendet werden können. Solche Aktualisierungsdaten können insbesondere ein Software-Update für den zumindest einen Teil der Betriebssoftware des Kommunikationsgeräts darstellen.

Der Begriff "Information" kann insbesondere eine einzelne Information oder eine Mehrzahl von Informationen bezeichnen.

Der Begriff "Geräteinformation über ein Kommunikationsgerät" kann insbesondere Information über Eigenschaften des Kommunikationsgeräts bezeichnen. Insbesondere können solche Eigenschaften eine Identifikation des zu aktualisierenden Kommunikationsgeräts, eine Art oder ein Typ des Kommunikationsgeräts (beispielsweise eine Generationsnummer), eine Gerätekomponente des Kommunikationsgeräts (beispielsweise eine Art einer Anzeigeeinheit) oder ein von dem Kommunikationsgerät unterstütztes Kommunikationsprotokolls betreffen.

Der Begriff "Gerätekontextinformation" kann insbesondere Information bezeichnen, die Eigenschaften eines Mehrgerätesystems betreffen kann, das das Kommunikationsgerät und das zumindest weitere Kommunikationsgerät aufweisen kann. Insbesondere können die Gerätekontextinformation einen Kontext oder betrieblichen Zusammenhang zwischen dem Kommunikationsgerät und dem zumindest weiteren Kommunikationsgerät betreffen. Insbesondere können diese Eigenschaften eine Identifikation des zu aktualisierenden Kommunikationsgeräts, eine Art oder ein Typ des Kommunikationsgeräts und/oder des zumindest weiteren Kommunikationsgeräts (beispielsweise eine Generationsnummer), eine Gerätekomponente des Kommunikationsgeräts und/oder des zumindest weiteren Kommunikationsgeräts (beispielsweise eine Art einer Anzeigeeinheit) oder ein von dem Kommunikationsgerät und/oder dem zumindest weiteren Kommunikationsgerät unterstütztes Kommunikationsprotokolls betreffen.

Der Begriff "kommunikativ koppelbare Kommunikationsgeräte" kann insbesondere Kommunikationsgeräte bezeichnen, deren Kommunikation untereinander aktiv (beispielsweise ein tatsächlicher stattfindender Datenaustausch zwischen den Kommunikationsgeräten) oder passiv (beispielsweise eine Erkennung des jeweils anderen Kommunikationsgeräts ohne Datenaustausch) sein kann.

Gemäß den exemplarischen Aspekten der vorliegenden Erfindung kann eine Aktualisierung einer Betriebssoftware eines Kommunikationsgeräts eines Mehrgerätesystems auf einer Gerätekontextinformation beruhen, die Geräteinformation über das zu aktualisierende Kommunikationsgerät und Geräteinformation über ein oder mehrere kommunikativ koppelbare Kommunikationsgeräte des Mehrgerätesystems berücksichtigen und von dem Kommunikationsgerät erzeugt werden kann.

Folglich kann das Laden der Aktualisierungsdaten des Kommunikationsgeräts verbessert werden, da eine Auswahl der zu ladenden Aktualisierungsdaten nicht nur auf der Geräteinformationen des zu aktualisierenden Kommunikationsgeräts, sondern auch auf der zumindest weiteren Geräteinformation des zumindest weiteren Kommunikationsgeräts beruhen und somit einen Kontext des Mehrgerätesystems berücksichtigen kann. Das Kommunikationsgerät kann folglich nach der Aktualisierung seiner Betriebssoftware automatisch an die technischen Gegebenheiten des Mehrgerätesystems optimal angepasst sein.

Ferner kann das Aktualisieren der Betriebssoftware des Kommunikationsgeräts (zumindest teilweise) automatisiert erfolgen, da das Kommunikationsgerät die Gerätekontextinformation erzeugen kann, so dass ein Benutzer des Kommunikationsgeräts keine oder nur eingeschränkte Kenntnis von der Geräteinformation über das Kommunikationsgerät und der zumindest weiteren Geräteinformation über das zumindest weitere Kommunikationsgerät haben muss.

Ferner kann das Aktualisieren der Betriebssoftware des Kommunikationsgeräts besonders zeitsparend durchgeführt werden, da das Kommunikationsgerät selbst die Gerätekontextinformation erzeugen kann und der Benutzer des Kommunikationsgeräts die Geräteinformation und die zumindest weitere Geräteinformation nicht sammeln und in das Kommunikationsgerät eingeben muss.

Das Aktualisieren der Betriebssoftware des Kommunikationsgeräts kann auch besonders kostengünstig durchgeführt werden, da die Betriebssoftware des Kommunikationsgeräts nicht unterschiedliche Varianten des zumindest weiteren Kommunikationsgeräts unterstützen und das Kommunikationsgerät folglich ohne unnötigen Speicherplatz besonders kostengünstig hergestellt sein kann.

Ausfiihrungsformen der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Im Weiteren werden Ausführungsformen des Verfahrens zum Laden von Aktualisierungsdaten für ein Kommunikationsgerät beschrieben. Diese Ausführungsformen gelten auch für das weitere Verfahren zum Laden von Aktualisierungsdaten für ein Kommunikationsgerät, das Kommunikationsgerät, das zumindest weitere Kommunikationsgerät, die Datenbereitstellungsvorrichtung, das System, das computerlesbare Speichermedium und das Programm-Element.

Das Verfahren kann ferner Erhalten der zumindest weiteren Geräteinformation von dem zumindest weiteren Kommunikationsgerät aufweisen, wodurch dem Kommunikationsgerät einfach und automatisiert die Geräteinformation über das zumindest weitere Kommunikationsgerät zur Erzeugung der Gerätekontextinformation bereitgestellt werden kann. Insbesondere kann das Erhalten der zumindest weiteren Geräteinformation durch ein Anfragen der zumindest weiteren Geräteinformation von dem zumindest weiteren Kommunikationsgerät oder durch ein spontanes Senden der zumindest weiteren Geräteinformation durch das zumindest weitere Kommunikationsgerät an das Kommunikationsgerät initiiert sein.

Das Verfahren kann ferner Erhalten der zumindest weiteren Geräteinformation von einem Benutzer des Kommunikationsgeräts aufweisen, wodurch bei einem nicht automatisiert erfolgendem Erhalten der Geräteinformation von dem zumindest weiteren Kommunikationsgeräts die zumindest weitere Geräteinformation dennoch dem Kommunikationsgerät bereitgestellt werden kann. Ferner kann durch diese Maßnahme Netzwerkkapazität aufgrund des Übertragens der zumindest weiteren Geräteinformation von dem zumindest weiteren Kommunikationsgerät an das Kommunikationsgerät vermieden werden. Insbesondere kann der Benutzer durch das Kommunikationsgerät aufgefordert werden, die zumindest weitere Geräteinformation (teilweise oder vollständig) über eine Benutzereingabe in das Kommunikationsgerät einzugeben. Insbesondere kann das Erzeugen der Gerätekontextinformation ein mehrstufiger Prozess sein, bei dem zuerst eine Gerätekontextinformation basierend auf der Geräteinformation über das Kommunikationsgerät erzeugt, der Benutzer des Kommunikationsgeräts danach die zumindest weitere Geräteinformation über das zumindest weitere Kommunikationsgerät in das Kommunikationsgerät eingeben und dann die erzeugte Gerätekontextinformation derart angepasst werden kann, dass die Gerätekontextinformation sowohl auf der Geräteinformation über das Kommunikationsgerät und der zumindest weiteren Geräteinformation über das zumindest weitere Kommunikationsgerät basieren kann. Insbesondere ist es ebenfalls möglich, dass der Benutzer des Kommunikationsgeräts die zumindest weitere Geräteinformation über das zumindest weitere Kommunikationsgerät in das Kommunikationsgerät eingeben kann, danach eine Gerätekontextinformation basierend auf der Geräteinformation über das Kommunikationsgerät erzeugt werden kann, und im Anschluss daran die Gerätekontextinformation entsprechend angepasst werden kann. Insbesondere ist es auch möglich, dass in letzteren Fall die Gerätekontextinformation nach der Eingabe der zumindest weiteren Geräteinformation basierend auf der Geräteinformation und der zumindest weiteren Geräteinformation direkt erzeugt werden kann.

Das Verfahren kann ferner Senden zumindest eines Teils der Gerätekontextinformation an eine Datenbereitstellungsvorrichtung aufweisen, wodurch eine Teilauswahl der potentiell geeigneten Aktualisierungsdaten für das Kommunikationsgerät ermöglicht werden kann. Der gesendete Teil der Gerätekontextinformation kann zumindest einen Teil der Geräteinformation und/oder zumindest einen Teil der zumindest weiteren Geräteinformation aufweisen.

Das Verfahren kann ferner Erhalten von Ladeinformation über die zu ladenden Aktualisierungsdaten von einer Datenbereitstellungsvorrichtung aufweisen, wodurch das Kommunikationsgerät einfach Kenntnis von den für das Kommunikationsgerät geeigneten Aktualisierungsdaten erhalten kann. Insbesondere kann die Ladeinformation eine Kennung der zu ladenden Aktualisierungsdaten und einen Adresshinweis auf die zu ladenden Aktualisierungsdaten (beispielsweise eine URL(engl. Uniform Resource Locator)) aufweisen. Insbesondere kann das Erhalten der Ladeinformation auf einem Senden der vollständigen Gerätekontextinformation an die Datenbereitstellungsvorrichtung basieren.

Insbesondere kann dazu die Datenbereitstellungsvorrichtung die geeigneten Aktualisierungsdaten für das Kommunikationsgerät basierend auf einem Vergleich der erhaltenen Gerätekontextinformation und einer Information über Zuordnungen der Gerätekontextinformation zu einer Mehrzahl von Aktualisierungsdaten auswählen.

Das Verfahren kann ferner Erhalten von Kompatibilitätsinformation über eine Mehrzahl von für das Kommunikationsgerät geeigneten Aktualisierungsdaten von einer Datenbereitstellungsvorrichtung aufweisen. Der Begriff "Kompatibilitätsinformation" kann insbesondere eine Information bezeichnen, die Kennungen von für das Kommunikationsgerät potentiell geeigneten Aktualisierungsdaten und Adresshinweise auf die potentiell geeigneten Aktualisierungsdaten aufweisen kann. Die Kompatibilitätsinformation kann insbesondere alle Aktualisierungsdaten der Zuordnungen des Datenbereitstellungsvorrichtungen oder einen Teil der Aktualisierungsdaten dieser Zuordnungen der Datenbereitstellungsvorrichtung angeben oder eine Nullinformation aufweisen.

Insbesondere kann die Datenbereitstellungsvorrichtung hierzu die Kompatibilitätsinformation basierend auf dem erhaltenen Teil der Gerätekontextinformation und der Information über die Zuordnungen der Gerätekontextinformation zu einer Mehrzahl von Aktualisierungsdaten erzeugen. Dies kann insbesondere dadurch erfolgen, dass die Datenbereitstellungsvorrichtung solche Aktualisierungsdaten ausschließen kann, deren Kennung nicht dem erhaltenen Teil der Gerätekontextinformation zugeordnet werden kann.

Das Verfahren kann ferner Auswählen der Aktualisierungsdaten basierend auf der Kompatibilitätsinformation aufweisen. Folglich kann der Schritt des Auswählens der Aktualisierungsdaten durch das Kommunikationsgerät automatisiert erfolgen, da dem Kommunikationsgerät alle für die Auswahl wichtigen Informationen bereitgestellt werden. Hierdurch kann eine benutzerbedingte Fehleranfälligkeit des Ladens der Aktualisierungsdaten für das Kommunikationsgerät verringert werden und das Verfahren zum Laden der Aktualisierungsdaten kann besonders zeitsparend sein.

Das Verfahren kann ferner Bereitstellen der Kompatibilitätsinformation an einen Benutzer des Kommunikationsgeräts und Erhalten von Auswahlinformation über eine Auswahl der Aktualisierungsdaten aus der Mehrzahl von für das Kommunikationsgerät geeigneten Aktualisierungsdaten von dem Benutzer aufweisen. Dies kann insbesondere ein Auswählen der zu ladenden Aktualisierungsdaten ermöglichen, wenn das Kommunikationsgerät basierend auf der Gerätekontextinformation und der Kompatibilitätsinformation die zu ladenden Aktualisierungsdaten nicht automatisiert auswählen kann, da beispielsweise zu wenig Geräteinformation und/oder zu wenig zumindest weitere Geräteinformation in der Gerätekontextinformation enthalten sein können.

Da die Auswahl der für das Kommunikationsgerät geeigneten Aktualisierungsdaten wahlweise durch die Datenbereitstellungsvorrichtung, das Kommunikationsgerät oder den Benutzer des Kommunikationsgeräts ausgeführt werden kann, kann insbesondere das Verfahren je nach gegebenen Randbedingungen besonders flexibel ausgeführt werden.

Insbesondere kann das Laden der Aktualisierungsdaten Laden der Aktualisierungsdaten von der Datenbereitstellungsvorrichtung und/oder von einer Aktualisierungsdatenbasis aufweisen. Die Aktualisierungsdatenbasis kann insbesondere mittels der Adressinformation auf die Aktualisierungsdaten angesprochen werden. Insbesondere kann bei dem Laden der Aktualisierungsdaten von der Datenbereitstellungsvorrichtung eine zugehörige Netzwerkstruktur des Kommunikationssystems besonders einfach mit wenigen Funktionalitätsentitäten ausgestaltet sein. Insbesondere kann bei dem Laden der Aktualisierungsdaten von der Aktualisierungsdatenbasis ein Speicherbedarf der Datenbereitstellungsvorrichtung besonders gering sein, da die Datenbereitstellungsvorrichtung lediglich Information über Zuordnungen der Gerätekontextinformation und der entsprechenden Aktualisierungsdaten aufweisen muss.

Alternativ oder zusätzlich kann das Laden der Aktualisierungsdaten ein Übergeben der Ladeinformation oder des Adresshinweises auf die zu ladenden Aktualisierungsdaten an ein Ladegerät zum Laden der Aktualisierungsdaten (beispielsweise einen Computer) und ein Erhalten der Aktualisierungsdaten von dem Ladegerät aufweisen, so dass die Aktualisierungsdaten auch Kommunikationsgeräten ohne Netzwerkanschluss bereitgestellt werden können.

Das Verfahren kann ferner Senden zumindest eines Teils der Ladeinformation oder zumindest eines Teils der Kompatibilitätsinformation an das zumindest weitere Kommunikationsgerät oder noch weitere Kommunikationsgeräte des Mehrgerätesystems aufweisen, so dass das zumindest weitere Kommunikationsgerät informiert werden kann, dass das zumindest weitere Kommunikationsgerät gegebenenfalls auch Aktualisierungsdaten laden muss, um eine Kommunikationsverbindung mit dem Kommunikationsgerät nach der Aktualisierung der Betriebssoftware des Kommunikationsgeräts unterstützen zu können.

Das Verfahren kann ferner Senden einer Aufforderung zum Laden von Aktualisierungsdaten an das zumindest weitere Kommunikationsgerät oder noch weitere Kommunikationsgeräte des Mehrgerätesystems aufweisen, wodurch das zumindest weitere Kommunikationsgerät an die aktualisierte Betriebssoftware des Kommunikationsgeräts angepasst werden kann. Insbesondere kann eine gesendete, explizite Aufforderung eine Form eines Ladebefehls aufweisen, und insbesondere kann eine gesendete, implizite Aufforderung Information aufweisen, aus der das zumindest weitere Kommunikationsgerät beispielsweise protokollbedingt erkennen kann, dass das Kommunikationsgerät Aktualisierungsdaten geladen hat. Insbesondere kann die zuletzt genannte Information den Teil der Ladeinformation oder den Teil der Kompatibilitätsinformation aufweisen. Insbesondere kann die Aufforderung eine Kennzeichnung der für das zumindest weitere Kommunikationsgerät geeigneten Aktualisierungsdaten und/oder einen entsprechenden Adresshinweis aufweisen.

Insbesondere kann das zumindest weitere Kommunikationsgerät zumindest eines der oben beschriebenen Verfahrensschritte zum Laden der Aktualisierungsdaten für das Kommunikationsgerät selbst ausführen, um für das zumindest weitere Kommunikationsgerät geeignete Aktualisierungsdaten zu laden.

Im Weiteren werden weitere exemplarische Ausführungsformen des Kommunikationsgeräts beschrieben. Diese Ausführungsformen gelten auch für die Verfahren zum Laden der Funktionalitätsdaten für das Kommunikationsgerät, das zumindest weitere Kommunikationsgerät, ein noch weiteres Kommunikationsgerät, die Datenbereitstellungsvorrichtung, das System, das computerlesbare Speichermedium und das Programm-Element.

Insbesondere kann das Kommunikationsgerät als Schnurlostelefon (beispielsweise als Mobilteil), als kabelgebundene Basisstation für das Schnurlostelefon oder als Reichweitenverdopplungsvorrichtung (beispielsweise als Repeater) ausgebildet sein.

Insbesondere kann das Kommunikationsgerät nach einem "Digital Enhanced Cordless Telecommunications"(DECT)-Standard, insbesondere nach einem "Cordless Advanced Technology Internet and Quality"(CAT-iq)-Standard ausgebildet sein.

Im Folgenden werden exemplarische Ausführungsbeispiele der vorliegenden Erfindung mit Verweis auf die folgenden Figuren detailliert beschrieben.
Figur 1 ist ein Flussdiagramm, das ein Verfahren zum Laden von Aktualisierungsdaten für ein Kommunikationsgerät gemäß einem exemplarischen Ausführungsbeispiel der Erfindung veranschaulicht.
Figur 2 ist ein Flussdiagramm, das ein Verfahren zum Laden von Aktualisierungsdaten für ein Kommunikationsgerät gemäß einem weiteren exemplarischen Ausführungsbeispiel der Erfindung veranschaulicht.
Figur 3 ist ein Flussdiagramm, das ein Verfahren zum Laden von Aktualisierungsdaten für ein Kommunikationsgerät gemäß einem noch weiteren exemplarischen Ausführungsbeispiel der Erfindung veranschaulicht.

Die Darstellungen in den Figuren sind schematisch und nicht maßstabsgetreu. Gleiche oder ähnliche Komponenten oder Verfahrensschritte in unterschiedlichen Figuren sind mit gleichen Bezugsziffern versehen oder mit Bezugsziffern, deren erste Zahl sich unterscheidet.

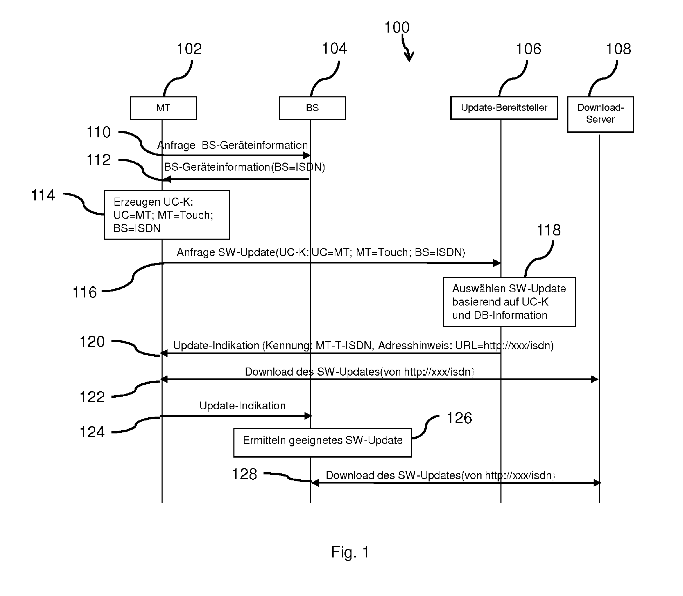

Fig. 1 zeigt ein Kommunikationssystem 100, das ein Kommunikationsgerät 102 in Form eines Mobilteils mit einem Touchscreen und ein weiteres Kommunikationsgerät 104 in Form einer Integrated Services Digital Network (ISDN) unterstützenden Basisstation aufweist. Das Mobilteil und die Basisstation 102, 104 bilden eine Telefonanordnung und sind gemäß DECT und CAT-iq ausgebildet.

Das Kommunikationssystem 100 weist ferner eine als Update-Bereitsteller ausgebildete Datenbereitstellungsvorrichtung 106 und eine Aktualisierungsdatenbasis 108 in Form eines Download-Servers auf.

Um eine Betriebssoftware des Mobilteils 102 zu aktualisieren, führt das Mobilteil 102 ein Verfahren zum Laden von Aktualisierungsdaten in Form eines Software-Updates (SW-Update) gemäß einem exemplarischen Ausführungsbeispiel der Erfindung aus.

In einem ersten Schritt 110 des Verfahrens sendet das Mobilteil 102 eine Anfrage an die Basisstation 104 über Geräteinformation der Basisstation 104. In einem Schritt 112 erhält das Mobilteil 102 die angeforderte Geräteinformation über die Basisstation 104 von der Basisstation 104. Diese Geräteinformation weist den Inhalt auf, dass die Basisstation 104 ISDN unterstützt (BS=ISDN). In einem weiteren Schritt 114 erzeugt das Mobilteil 104 Gerätekontextinformation UC-K basierend auf der Geräteinformation über die Basisstation 104 und Geräteinformation über das Mobilteil 102, die den Inhalt hat, dass der Update-Client für den Update-Bereitsteller 106 das Mobilteil 102 ist (UC=MT) und dass das Mobilteil 102 den Touchscreen aufweist (MT=Touch).

In einem weiteren Schritt 116 sendet das Mobilteil 102 eine Anfrage über ein geeignetes Software-Update an die Basisstation 104, indem das Mobilteil 102 die erzeugte Gerätekontextinformation UC-K an den Update-Bereitsteller 106 sendet. In einem Schritt 118 wählt der Update-Bereitsteller 106 basierend auf der erhaltenen Gerätekontextinformation UC-K und einer Information über Zuordnungen zwischen Gerätekontextinformation und entsprechenden Aktualisierungsdaten (DB-Information) das geeignete Software-Update für das Mobilteil 102 aus.

In einem weiteren Schritt 120 informiert der Update-Bereitsteller 106 das Mobilteil 102 über das ausgewählte Software-Update, indem der Update-Bereitsteller 106 eine Ladeinformation in Form einer Update-Indikation an das Mobilteil 102 sendet. Die Ladeinformation weist eine Kennung des Software-Updates (MT-T-ISDN) und einen Adresshinweis auf das zu ladende Software-Update (URL = http://xxx/isdn) auf. In einem weiteren Schritt 122 lädt das Mobilteil 102 das Software-Update mittels des Adresshinweises von dem Download-Server 108.

In einem weiteren Schritt 124 informiert das Mobilteil 102 die Basisstation 104 über das ausgeführte Software-Update, indem das Mobilteil 102 die Ladeinformation teilweise oder vollständig der Basisstation 104 zur Verfügung stellt. Die Basisstation 104 ermittelt daraufhin in einem Schritt 126 durch eigenes Ausführen der Schritte 116 bis 120 ein für die Basisstation 104 geeignetes Software-Update, und lädt in einem Schritt 128 das geeignete Software-Update von dem Download-Server 108.

Der Update-Bereitsteller 106 kann auch die Software-Updates für das Mobilteil 102 in einer in dem Update-Bereitsteller 106 enthaltenen Datenbasis aufweisen, so dass das Mobilteil 102 das ausgewählte Software-Update direkt von dem Update-Bereitsteller 106 lädt.

Die Basisstation 104 kann auch die Geräteinformation über die Basisstation 104 spontan an das Mobilteil 102 senden, ohne, wie im Schritt 110 dargestellt, die Anfrage über die Geräteinformation der Basisstation 104 erhalten zu haben.

Die Telefonanlage kann ebenfalls ein weiteres Kommunikationsgerät in Form eines weiteren Mobilteils aufweisen, so dass das Mobilteil 102 die Gerätekontextinformation UC-K basierend auf der Geräteinformation über das Mobilteil 102, der Geräteinformation über die Basisstation 104 und der Geräteinformation über das weitere Mobilteil erzeugt. Das Laden des Software-Updates basierend auf der erzeugten Gerätekontextinformation erfolgt ähnlich, wie in den Schritten 116-122 dargestellt ist. Das Mobilteil 102 kann auch das weitere Mobilteil durch Senden (eines Teils) der Ladeinformation über das durchgeführte Software-Update informieren, so dass das weitere Mobilteil ein entsprechendes Software-Update laden kann.

Alternativ kann das weitere Kommunikationsgerät anstelle als weiteres Mobilteil als weitere Basisstation oder als Repeater ausgebildet sein.

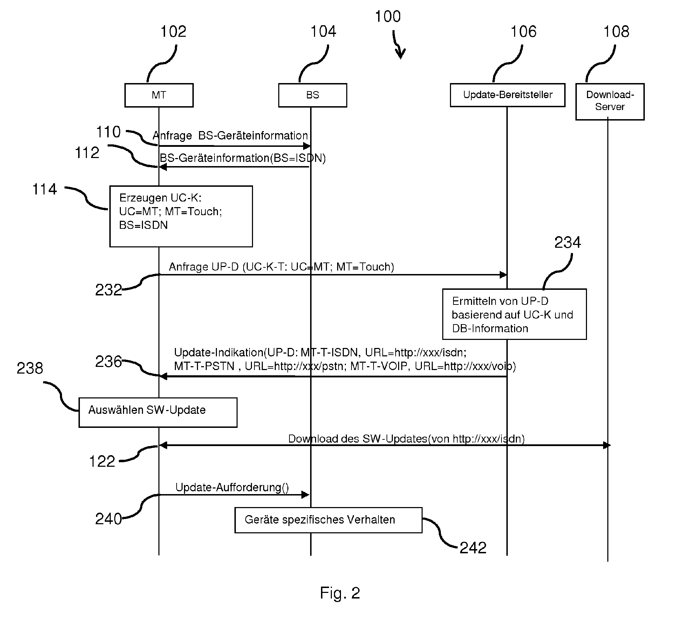

Bezugnehmend auf Figur 2 wird ein Verfahren zum Laden eines Software-Updates für das Mobilteil 102 gemäß einem weiteren exemplarischen Ausführungsbeispiel der Erfindung beschrieben. Das in Figur 2 gezeigte Kommunikationssystem 100 ist identisch zu dem in Figur 1 gezeigten Kommunikationssystem 100.

Wie in Figur 1 beschrieben, sendet das Mobilteil 102 in einem Schritt 110 eine Anfrage an die Basisstation 104 über Geräteinformation der Basisstation 104 und erhält in einem Schritt 112 die angefragte Geräteinformation über die Basisstation 104. Daraufhin erzeugt das Mobilteil 102 in einem Schritt 114 die Gerätekontextinformation UC-K.

In einem weiteren Schritt 232 sendet das Mobilteil 102 eine Anfrage über Kompatibilitätsinformation UP-D an den Update-Bereitsteller 106. Die Anfrage enthält einen Teil der Gerätekontextinformation UC-K-T, die den Inhalt aufweist, dass der erfragende Update-Client das Mobilteil 102 ist (UC=MT) und dass das Mobilteil 102 einen Touchscreen aufweist (MT=Touch). Der Update-Bereitsteller 106 ermittelt in einem Schritt 234 die Kompatibilitätsinformation UP-D basierend auf dem erhaltenen Teil der Gerätekontextinformation UC-K-T und der Information UB-Information über die Zuordnungen zwischen der Gerätekontextinformation und entsprechenden Aktualisierungsdaten.

In einem Schritt 236 sendet der Update-Bereitsteller 106 die erzeugte Kompatibilitätsinformation UP-D in Form einer Update-Indikation an das Mobilteil 102. Die Kompatibilitätsinformation UP-D weist für alle möglichen Geräteeigenschaften über dieder Kommunikationsgeräte 102, 104 der Telefonanlage Kennungen der potentiell geeigneten Software-Updates (MT-T-ISDN; MT-T-PSTN; MT-T-VOIP) und Adresshinweise auf die zu ladenden Software-Updates (URL=http://xxx/isdn; URL=http://xxx/pstn; URL=http://xxx/voip) auf. In einem Schritt 238 wählt das Mobilteil 102 basierend auf der erhaltenen Kompatibilitätsinformation UP-D das Software-Update aus, das mit der vorhandenen Gerätekontextinformation UC-K übereinstimmt. Dieses Software-Update ist durch die Kennung MT-T-ISDN bestimmt.

In einem weiteren Schritt 122 lädt das Mobilteil 102 das Software-Update von dem Download-Server 108 unter Verwendung des Adresshinweises, der in der Kompatibilitätsinformation UP-D für die Kennung MT-T-ISDN enthalten war.

In einem Schritt 240 fordert das Mobilteil 102 die Basisstation 104 auf, ebenfalls ein Software-Update zu laden, um eine Kompatibilität zwischen dem Mobilteil 102 und der Basisstation 104 auch in Zukunft zu gewährleisten. Im Anschluss daran führt die Basisstation 104 in einem Schritt 242 gerätespezifische Schritte zum Laden eines für die Basisstation 104 geeigneten Software-Updates aus.

Das Mobilteil 102 kann auch die vollständige Gerätekontextinformation UC-K an den Update-Bereitsteller 106 senden, und basierend auf der erhaltenen Kompatibilitätsinformation UP-D das geeignete Software-Update auswählen.

Das Senden 240 der Update-Aufforderung kann auch zwischen dem Schritt 238 und dem Schritt 122 ausgeführt werden.

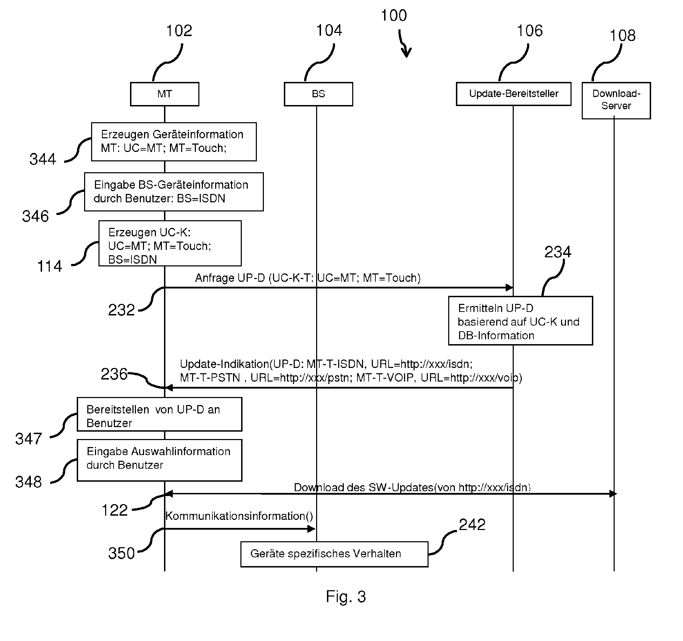

Bezugnehmend auf Figur 3 wird ein Verfahren zum Laden eines Software-Updates für ein Mobilteil 102 gemäß einem noch weiteren Ausführungsbeispiel der Erfindung beschrieben. Das in Figur 3 gezeigte Kommunikationssystem 100 ist identisch zu dem in Figur 1 gezeigten Kommunikationssystem 100.

In einem ersten Verfahrensschritt 344 wird die Geräteinformation des Mobilteils 102 durch das Mobilteil 102 erzeugt. Die Geräteinformation hat den Inhalt, dass der Update-Client das Mobilteil 102 ist (UC=MT) und dass das Mobilteil 102 ein Touchscreen hat (MT=Touch).

In einem weiteren Schritt 346 fordert das Mobilteil 102 einen Benutzer des Mobilteils 102 auf, die Geräteinformation über die Basisstation 104 in das Mobilteil 102 mittels einer Benutzereingabe einzugeben. Die hierdurch erhaltene Geräteinformation über die Basisstation 104 enthält die Information, dass die Basisstation ISDN unterstützt (BS=ISDN).

Im Folgenden werden die Schritte 114, 232, 234 und 236 ausgeführt, die mit Bezug auf Figur 2 beschrieben sind.

In einem daran anschließenden Schritt 347 stellt das Mobilteil 102 über die Benutzereingabe dem Benutzer des Mobilteils 102 die Kompatibilitätsinformation UP-D zur Verfügung. In einem Schritt 348 fordert das Mobilteil 102 den Benutzer über die Benutzereingabe auf, Auswahlinformation einzugeben, mittels der das zu ladende Software-Update gekennzeichnet ist. Das Mobilteil 102 erhält dadurch die Auswahlinformation von dem Benutzer. In einem Schritt 122 lädt das Mobilteil 102 von dem Download-Server 108 das Software-Update basierend auf der Auswahlinformation.

In einem weiteren Schritt 350 sendet das Mobilteil 102 spezifische Kommunikationsinformation an die Basisstation 104, um die Basisstation 104 aufzufordern, auch ein entsprechendes Software-Update zu laden. Die Basisstation 104 empfängt die Kommunikationsinformation und erkennt protokollbedingt aus der Kommunikationsinformation, dass das Mobilteil 102 ein Software-Update erfahren hat und die Basisstation 104 das entsprechendes Software-Update für sich laden muss. In einem Schritt 242 führt die Basisstation 104 die gerätespezifischen Schritte zum Laden eines entsprechenden Software-Updates aus.

Er wird angemerkt, dass bei den mit Bezug auf Fig. 1 bis 3 beschriebenen Verfahren das Mobilteil 102 und die Basisstation 104 durch das jeweils andere Kommunikationsgerät ersetzt sein können. In einem solchen Fall führt anstelle des Mobilteils 102 die Basisstation 104 die Verfahrensschritte eines entsprechenden Verfahrens zum Laden eines Software-Updates für die Basisstation 104 aus, und das Mobilteil 102 agiert hierbei anstelle der Basisstation 104 als das weitere Kommunikationsgerät.

Ergänzend ist darauf hinzuweisen, dass "aufweisend" keine anderen Elemente oder Schritte ausschließt und die Verwendung des Artikels "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Laden von Aktualisierungsdaten für ein Mehrgerätesystem, umfassend ein Kommunikationsgerät (102) und zumindest ein weiteres, kommunikativ koppelbares Kommunikationsgerät (104), wobei das Verfahren von dem Kommunikationsgerät (102) initiiert wird, wobei das Verfahren aufweist:
- Erzeugen (114) von Gerätekontextinformationdurch das Kommunikationsgerät (102) basierend auf einer Geräteinformation über das Kommunikationsgerät (102) und zumindest einer weiteren Geräteinformation über zumindest ein weiteres Kommunikationsgerät (104), das mit dem Kommunikationsgerät (102) kommunikativ koppelbar ist,
- Erhalten (120) von Ladeinformation über die zu ladenden Aktualisierungsdaten von einer Datenbereitstellungsvorrichtung (106).
- Laden (122) der Aktualisierungsdaten basierend auf der Gerätekontextinformation durch das Kommunikationsgerät (102),
- Senden (124) von zumindest einem Teil der Ladeinformation von dem Kommunikationsgerät (102) oder Senden (240, 350) einer Aufforderung zum Laden von Aktualisierungsdaten an das zumindest weitere Kommunikationsgerät (104), und
- Laden (128) von Aktualisierungsdaten basierend auf der Ladeinformation durch das weitere Kommunikationsgerät (104).

2. Verfahren nach Anspruch 1, wobei das Verfahren ferner aufweist:
- Erhalten (112) der zumindest weiteren Geräteinformation von dem zumindest weiteren Kommunikationsgerät (104).

3. Verfahren nach Anspruch 1 oder 2, wobei das Verfahren ferner aufweist:
- Erhalten (346) der zumindest weiteren Geräteinformation von einem Benutzer des Kommunikationsgeräts (102).

4. Verfahren nach einem der Ansprüche 1 bis 3, wobei das Verfahren ferner aufweist:
- Senden (116, 232) zumindest eines Teils der Gerätekontextinformation an eine Datenbereitstellungsvorrichtung (106).

5. Verfahren nach einem der Ansprüche 1 bis 4, wobei das Verfahren ferner aufweist:
- Erhalten (236) von Kompatibilitätsinformation über eine Mehrzahl von für das Kommunikationsgerät (102) geeigneten Aktualisierungsdaten von einer Datenbereitstellungsvorrichtung (106).

6. Verfahren nach Anspruch 5, wobei das Verfahren ferner aufweist:
- Auswählen (238) der Aktualisierungsdaten basierend auf der Kompatibilitätsinformation.

7. Verfahren nach Anspruch 5 oder 6, wobei das Verfahren ferner aufweist:
- Bereitstellen (247) der Kompatibilitätsinformation an einen Benutzer des Kommunikationsgeräts (102), und
- Erhalten (248) von Auswahlinformation über eine Auswahl der Aktualisierungsdaten aus der Mehrzahl von für das Kommunikationsgerät (102) geeigneten Aktualisierungsdaten von dem Benutzer.

8. Verfahren nach einem der Ansprüche 5 bis 7, wobei das Verfahren ferner aufweist:
- Senden (124) zumindest eines Teils der Kompatibilitätsinformation an das zumindest weitere Kommunikationsgerät (104).

## Claims

1. A method for loading update data for a multiple device system, comprising a communication device (102) and at least one further, communicatively coupleable communication device (104), wherein the method is initiated by the communication device (102), wherein the method comprises the steps of:
- the communication device (102) generating (114) device context information based on a piece of device information on the communication device (102) and based on at least one further piece of device information on at least one further communication device (104), which is communicatively coupleable to the communication device (102),
- receiving (120), from a data provision device (106), loading information on the update data to be loaded,
- the communication device (102) loading (122) the update data based on the device context information,
- the communication device (102) sending (124) at least one part of the loading information or sending (240, 350) a request to load update data to the at least one further communication device (104), and
- the further communication device (104) loading (128) update data based on the load information.

2. The method according to claim 1, wherein the method further comprises the step of:
- the at least one further communication device (104) receiving (112) the at least one further bit of device information.

3. The method according to claim 1 or 2, wherein the method further comprises the step of:
- a user of the communication device (102) receiving (346) the at least one further bit of device information.

4. The method according to any one of claims 1 to 3, wherein the method further comprises the step of:
- sending (116, 232) at least a part of the device context information to a data provision device (106).

5. The method according to any one of claims 1 to 4, wherein the method further comprises the step of:
- a data provision device (106) receiving (236) compatibility information on a plurality of updata data suitable for the communication device (102).

6. The method according to claim 5, wherein the method further comprises the step of:
- selecting (238) the update data based on the compatibility information.

7. The method according to claim 5 or 6, wherein the method further comprises the step of:
- providing (247) the compatibility information to a user of the communication device (102), and
- the user receiving (248) selection information on a selection of the update data from the plurality of updata data suitable for the communication device (102).

8. The method according to any one of claims 5 to 7, wherein the method further comprises the step of:
- sending (124) at least one part of the compatibility information to the at least one further communication device (104).

## Revendications

1. Procédé pour le chargement de données d'actualisation pour un système multipostes, comprenant un appareil de communication (102) et au moins un autre appareil de communication (104) susceptible d'être couplé de manière communicative, le procédé étant initié par l'appareil de communication (102), le procédé comprenant :
- la production (114) d'informations contextuelles concernant l'appareil, par l'appareil de communication (102), sur la base d'une information d'appareil concernant l'appareil de communication (102) et d'au moins une autre information d'appareil concernant au moins un autre appareil de communication (104) susceptible d'être couplé de façon communicative avec l'appareil de communication (102),
- l'obtention (120) d'informations de chargement concernant les données d'actualisation à charger, en provenance d'un dispositif de mise à disposition de données (106),
- le chargement (122) des données d'actualisation sur la base de l'information contextuelle concernant l'appareil, par l'appareil de communication (102),
- l'envoi (124) d'au moins une partie de l'information de chargement par l'appareil de communication (102) ou l'envoi (240, 350) d'une requête pour le chargement de données d'actualisation à l'au moins un autre appareil de communication (104), et
- le chargement (128) de données d'actualisation sur la base de l'information de chargement par l'autre appareil de communication (104).

2. Procédé selon la revendication 1, le procédé comprenant en outre :
- l'obtention (112) de l'au moins une autre information d'appareil de la part de l'au moins un autre appareil de communication (104).

3. Procédé selon la revendication 1 ou 2, le procédé comprenant en outre :
- l'obtention (346) de l'au moins une autre information d'appareil de la part d'un utilisateur de l'appareil de communication (102).

4. Procédé selon l'une des revendications 1 à 3, dans lequel le procédé comprend en outre :
- l'envoi (116, 232) d'au moins une partie de l'information contextuelle concernant l'appareil à un dispositif de mise à disposition de données (106).

5. Procédé selon l'une des revendications 1 à 4, le procédé comprenant en outre :
- l'obtention (236) d'une information de compatibilité concernant une pluralité de données d'actualisation adaptées à l'appareil de communication (102), de la part d'un de mise à disposition de données (106).

6. Procédé selon la revendication 5, le procédé comprenant en outre :
- la sélection (238) des données d'actualisation sur la base de l'information de compatibilité.

7. Procédé selon la revendication 5 ou 6, le procédé comprenant en outre :
- la mise à disposition (247) de l'information de compatibilité pour un utilisateur de l'appareil de communication (102), et
- l'obtention (248) d'une information de sélection concernant la sélection des données d'actualisation parmi la pluralité de données d'actualisation adaptées à l'appareil de communication (102), de la part de l'utilisateur.

8. Procédé selon l'une des revendications 5 à 7, le procédé comprenant en outre :
- l'envoi (124) d'au moins une partie de l'information de compatibilité à l'au moins un autre appareil de communication (104).
